# EUROPÄISCHE PATENTANMELDUNG

(11) **EP 0 898 994 A2**
(43) Veröffentlichungstag der Anmeldung: **03.03.1999**
(21) Anmeldenummer: 98115630.0
(22) Anmeldetag: 19.08.1998
(51) Int. Cl.: A63F 1/02, G09B 1/00

(54) **Lernspielkarte**

(30) Priorität: 27.08.1997 DE 29715399 U
(71) Anmelder: Arena Verlag GmbH, 97074 Würzburg (DE); Dandl, Friedrich, 81541 München (DE)
(72) Erfinder: Dandl, Friedrich, 81541 München (DE)
(74) Vertreter: Melzer, Wolfgang, Dipl.-Ing.

(57) **Zusammenfassung**

Die Erfindung sieht eine Karte für Lernspielanwendungen vor, die wenigstens zwei im wesentlichen gleich große Löcher7, 8 aufweist. Auf der Vorderseite 1 der Karte sind wenigstens drei getrennte Abschnitte 9, 10, 11 aufgedrinckt. Je ein Abschnitt 9, 10 ist dabei einem der Löcher 7, 8 zugeordnet. Die Karte weist weiterhin eine Rückseite 6 auf, die mit einem Bildmotiv 5 oder einer Graphik bedruckt ist, wobei das Bildmotiv 5 bzw. die Graphik auf der Rückseite 6 der Karte so angeordnet ist, das wenigstens eines der Löcher 7, 8 kein integrierter Bestandteil des Bildmotivs 5 bzw. der Graphik auf der Rückseite 6 der Karte ist.

## Beschreibung

Die vorliegende Erfindung bezieht sich auf eine Karte, die für Lernspiele Anwendung finden kann.

Aus dem Stand der Technik ist es bekannt, Spielkarten auf der Vorder- und Rückseite mit einem Bildmotiv zu bedrucken und diese Spielkarte mit einem loch zu versehen. Dieses Loch ist dabei so angeordnet und bemessen, daß, wenn die spielende Person einen Finger oder einen Stift durch dieses Loch von der Vorderseite der Spielkarte her durch die Spielkarte steckt, der auf der Rückseite der Spielkarte herausragende Finger oder Stift in amüsanter Weise das Bildmotiv auf der Rückseite der Spielkarte ergänzt. Beispielsweise kann der auf der Rückseite der Karte herausragende Teil des Fingers oder des Stifts eine dreidimensionale Gestaltung der Nase eines Gesichts darstellen, wenn dieses Gesicht als Bildmotiv auf der Rückseite der Spielkarte vorgesehen ist.

Eine derartige Spielkarte erzielt indessen beim Spieler einen reinen Unterhaltungseffekt und weist keinerlei Lerneffekt auf.

Es ist daher Aufgabe der vorliegenden Erfindung, eine Spielkarte der oben genannten Art konstruktiv derart zu gestalten, daß sie im Sinne einer Lernspielkarte beim Benutzer auch einen lerneffekt hinterlassen kann.

Zentraler Gedanke der Erfindung ist es dabei, die Lernspielkarte mit wenigstens zwei Löchern zu versehen.

Gemäß der vorliegenden Erfindung ist dazu eine Karte für Lernspielanwendungen vorgesehen, die zwei im wesentlichen gleich große Löcher aufweist. Eine Vorderseite der Karte ist mit wenigstens drei getrennten Abschnitten bedruckt. Dabei ist jeweils ein Abschnitt einem der Löcher zugeordnet. Die Rückseite der Karte ist mit einem Bildmotiv oder einer Graphik bedruckt. Dabei ist das Bildmotiv bzw. die Graphik auf der Rückseite der Karte so angeordnet, daß wenigstens eines der Löcher kein integrierter Bestandteil des Bildmotivs bzw. der Graphik auf der Rückseite der Karte ist.

Um gut einen Finger oder einen Stift hindurchstecken zu können, können die Löcher beispielsweise einen Durchmesser zwischen etwa 0,5 cm und etwa 2,0 cm aufweisen.

Eine Schnur oder ein Band kann an der Karte befestigt sein, wobei die Löcher so bemessen sind, daß die Schnur bzw. das Band hindurchfädelbar ist. Das Band kann beispielsweise aus einer Kunststofffolie gestanzt sein und die Löcher im wesentlichen schlitzförmig sein.

Die Löcher können eine Rechteckform aufweisen.

Klammerelemente können vorgesehen sein, die an den Rändern der Löcher festklemmbar sind, wobei im Falle der Klammerelemente Löcher mit Rechteckform von Vorteil sind. Beispielsweise gegen Verlust durch Verlieren können die Klammerelemente mit einer Schnur an der Karte befestigt sein.

Einer der auf die Vorderseite gedruckten Abschnitte kann ein Aufgabenabschnitt sein, der dem Benutzer beispielsweise durch eine Mischung von Text- und Bildelementen eine Aufgabe stellt.

Es können auch mehrere Löcher optisch integrierter Bestandteil des Bildmotivs bzw. der Graphik auf der Rückseite der Karte sein.

Die Karte kann aus einem Kartonmaterial gefertigt sein. Die Karte kann rechteckig ausgebildet sein. Dabei können die Löcher so angeordnet sein, daß eine Verbindungslinie der Löcher im wesentlichen parallel zu einer der Kanten der Karte ist.

Auf der Rückseite der Karte kann nur eine einzige zusammenhängende Bilddarstellung aufgedruckt sein, wobei immer wenigstens ein Loch nicht Bestandteil dieser Bilddarstellung ist.

Erfindungsgemäß ist weiterhin eine Anordnung für Lernspielanwendungen vorgesehen. Diese Anordnung weist mehrere fächerartig verbundene Karten auf, sowie eine Schnur, die an den Karten befestigt ist, wobei die Löcher so bemessen sind, daß die Schnur durch die Löcher hindurchfädelbar ist. Gemäß der Erfindung stellt die Schnur gleichzeitig die Bindung der mehreren Karten dar.

Gemäß der vorliegenden Erfindung ist also eine Lernspielkarte vorgesehen, die eine Vorderseite aufweist, auf die wenigstens drei optisch getrennte Abschnitte gedruckt sind. Ein Abschnitt stellt dabei einen Aufgabenabschnitt dar. Wenigstens zwei Abschnitte stellen Lösungsvorschlags-Abschnitte dar. Die Rückseite der Lernspielkarte ist mit einem Bildmotiv versehen. Die Lernspielkarte weist wenigstens zwei Löcher auf, wobei jeweils ein Loch einem der Lösungsvorschlags-Abschnitte zugeordnet ist. Die Löcher weisen jeweils einen identischen Durchmesser in einem Bereich zwischen etwa 0,5 cm und 2,0 cm auf. Das Bildmotiv auf der Rückseite ist so angeordnet und/oder ausgebildet, daß wenigstens eines der Löcher kein optisch integrierter Bestandteil des Bildmotivs auf der Rückseite ist. Das rückseitige Bildmotiv kann also durch ein Hindurchstecken von einem oder mehreren Fingern oder Stiften in das Loch, das der richtigen Lösung zugeordnet ist, bzw. in die richtige Kombination von Löchern vervollständigt werden. Der Aufgabenabschnitt und/oder die Lösungsvorschlags-Abschnitte auf der Vorderseite der Lernspielkarte können Bildmotive aufweisen. Der Aufgabenabschnitt und/oder die Lösungsvorschlags-Abschnitte auf der Vorderseite können einen Text aufweisen. Selbstverständlich kann der Aufgabenabschnitt und/oder die Lösungsvorschlags-Abschnitte Bildmotive und Text gemischt aufweisen.

Die Erfindung soll nun anhand von Ausführungsbeispielen und bezugnehmend auf die begleitenden Figuren näher erläutert werden. Es zeigen:
- Figur 1: eine Ansicht von vorne einer erfindungsgemäßen Karte, die für Lernspiele Anwendung finden kann,
- Figur 2: eine Ansicht einer erfindungsgemäßen Lernspielkarte von vorne gemäß einem weiteren Ausführungsbeispiel,
- Figur 3: eine seitliche Schnittansicht einer erfindungsgemäßen Lernspielkarte mit einem durch ein Loch hindurchgestecktem Finger,
- Figur 4: eine rückseitige Ansicht einer erfindungsgemäßen Lernspielkarte,
- Figur 5: eine Ansicht von vorne bzw. von hinten eines weiteren Ausführungsbeispiels der Erfindung, bei dem eine Schnur an der Karte befestigt ist,
- Figur 6: eine Ansicht von vorne bzw. Von hinten eines weiteren Ausführungsbeispiels der Erfindung, bei dem ein Kunststoffband an der Karte befestigt ist, und
- Figur 7: eine Ansicht von vorne bzw. Von hinten eines weiteren Ausführungsbeispiels der Erfindung, bei dem Klammerelemente an der Karte befestigt sind.
- Figur 8: ein weiteres ausführungsbeispiel der Erfindung, bei dem eine Schnur durch Löcher fädelbar ist und mehrere Karten fächerartig gebunden sind.

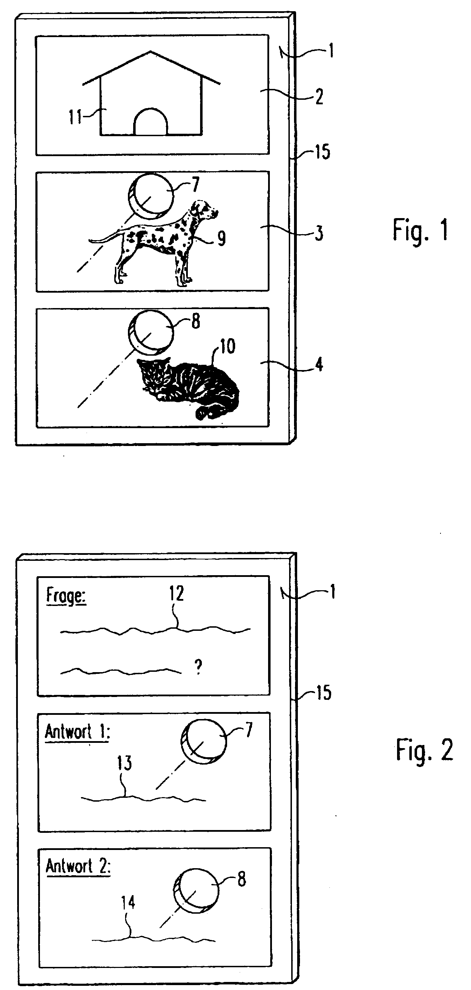

Wie in Figur 1 zu sehen, besteht eine erfindungsgemäße Lernspielkarte im wesentlichen aus einem zugeschnittenen Bogen aus einem Karton- oder Kunststoffmaterial, der beidseitig bedruckt ist und zwei Löcher 7, 8 aufweist. Es kann sich auch um ein kunststoffbeschichtetes Kartonmaterial handeln. Die Abmessungen der erfindungsgemäßen Lernspielkarte können beispielsweise hinsichtlich der Breite in einem Bereich zwischen 4,0 und 10,0 cm und hinsichtlich der Länge in einem Bereich zwischen 5,0 und 20,0 cm liegen. Wie in Figur 1 ersichtlich ist die Vorderseite einer erfindungsgemäßen Lernspielkarte in dem dargestellten Beispiel in drei optisch getrennte Abschnitte unterteilt, die auf die Vorderseite der Lernspielkarte aufgedruckt sind. Ein Abschnitt 2 stellt dabei einen Aufgabenabschnitt dar und ist im Figur 1 dargestellten Beispiel mit einem Bildmotiv 11, nämlich einer Hütte bedruckt. Die zwei weiteren optisch von dem Aufgabenabschnitt 2 und untereinander getrennten Abschnitte 3, 4 stellen Lösungsvorschlags-Abschnitte dar. Im in Figur 1 dargestellten Ausführüngsbeispiel sind auch die beiden LösungsvorschlagsAbschnitte 3, 4 mit einem Bildmotiv 9 bzw. 10 versehen. Das Bildmotiv 9 des Lösungsvorschlags-Abschnitts 3 stellt einen Hund dar, während das Bildmotiv 10 des Lösungsvorschlags-Abschnitts 4 eine Katze darstellt.

Jedem der Lösungsvorschlags-Abschnitte 3, 4 ist ein Loch 7 bzw. 8 zugeordnet, das durch die Lernspielkarte hindurchgeht. Der Durchmesser der Löcher 7, 8 ist dabei so bemessen, daß ein menschlicher Finger oder ein Stift hindurchgesteckt werden kann. Der Durchmesser liegt also vorzugsweise in einem Bereich zwischen 0,5 cm und 2,0 cm.

Wie bereits erwähnt, stellt das Bildmotiv 11, nämlich die Hütte, eine Aufgabenstellung dar. Im dargestellten Beispiel ist durch den Benutzer als Lösung auszuwählen, welches der in den Lösungsvorschlags-Abschnitten 3 bzw. 4 dargestellten Bildmotive 9 bzw. 10 ein Tier darstellt, das in der Hütte 11 üblicherweise nächtigt. Wenn der Benutzer von der Auffassung ist, daß der als Bildmotiv 9 dargestellte Hund die Lösung darstellt, steckt er einen Finger oder einen Stift durch das Loch 7, das dem Lösungsvorschlag-Abschnitt 3 bzw. 4 zugeordnet ist, der nach Auffassung des Benutzers die richtige Lösung aufgedruckt enthält. Im vorliegenden Beispiel wird also der Benutzer bei richtigem Erkennen einen Finger oder einen Stift oder dergleichen durch das Loch 7 hindurchstecken.

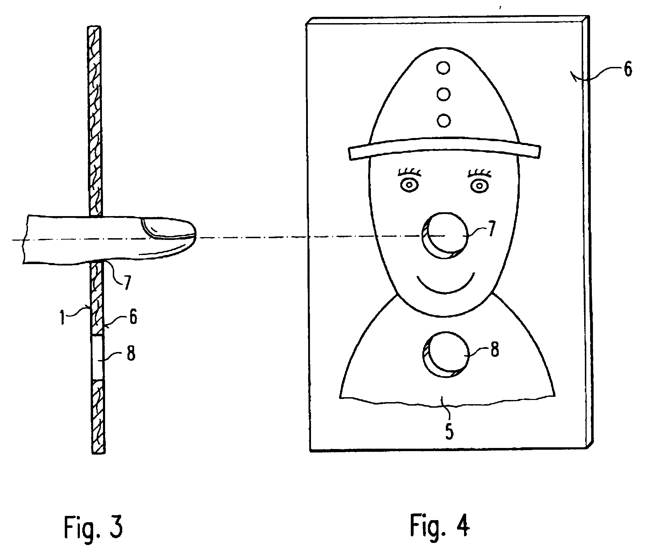

Somit ergibt sich der in Figur 3 dargestellte Zustand. In Figur 3 ist der Zustand dargestellt, daß ein Benutzer einen Finger von der Vorderseite 1 der Spielkarte her durch das Loch 7 hindurchgesteckt hat und somit ein Teil des Fingers auf der Rückseite 6 der erfindungsgemäßen Lernspielkarte herausragt.

Um die Wirkung des auf der Rückseite 5 der Lernspielkarte herausragenden Stifts oder Fingers zu erläutern, soll nunmehr bezugnehmend auf Figur 4 erläutert werden, wie die Rückseite 5 der Lernspielkarte der Erfindung ausgestaltet ist.

Wie in Figur 4 zu sehen, ist die Rückseite 5 der erfindinngsgemäßen Lernspielkarte mit einem Bildmotiv 5 bedruckt. Alternativ kann die Rückseite auch mit einer Graphik bedruckt sein. Das Bildmotiv 5 auf der Rückseite 6 der erfindinngsgemäßen Lernspielkarte ist dabei so ausgestaltet und angeordnet, daß eines der Löcher 7, 8 der Lernspielkarte optisch integrierter Bestandteil des Motivs 5 ist. Das andere Loch, im dargestellten Beispiel von Figur 4, das Loch 8, ist hingegen kein optisch integrierter Bestandteil des Motivs 5 auf der Rückseite 6 der erfindungsgemäßen Lernspielkarte, es hat somit keine optische Funktion für das Bildmotiv 5 auf der Rückseite 6 der erfindungsgemäßen Lernspielkarte. "Optisch integrierter Bestandteil des Bildmotivs" soll im Sinne der vorliegenden Beschreibung bedeuten, daß dort, wo das Loch angeordnet ist, das die richtige Lösung für die Aufgabenstellung in dem Aufgabenabschnitt 2 auf der Vorderseite 1 der erfindinngsgemäßen Lernspielkarte darstellt, sich das entsprechende Loch in das Bildmotiv 5 passend einfügt, in dem Sinne, daß an der Position des Loches sich ein in der Aufsicht etwa kreisförmiger Gegenstand stimmig in das Bildmotiv 5 einfügt. Für den Fall, daß auf der Rückseite eine Graphik aufgedruckt ist, vervollständigt das der richtigen Lösung zugeordnete Loch die Graphik.

Eine besonders gute Wirkung wird erzielt, wenn der herausragende Teil auf der Rückseite 6 der erfindungsgemäßen Lernspielkarte die dreidimensionale Verkörperung des an dieser Stelle vorliegenden Teil des Bildmotivs darstellt. In dem in Figur 4 dargestellten Beispiel ist das Bildmotiv 5 ein Gesicht eines Clowns oder dergleichen, wobei der durch das Loch 7 hindurchgesteckte Finger oder Stift die dreidimensionale Verkörperung der Nase des Gesichts des Clowns darstellt. Das andere Loch 8 indessen, das auf der Vorderseite 1 der erfindungsgemäßen Lernspielkarte einem Bildmotiv 10 zugeordnet ist, das eine falsche Lösung für die Aufgabe des Aufgabenabschnitts 2 auf der Vorderseite 1 der erfindinngsgemäßen Lernspielkarte darstellt, ist dagegen hinsichtlich des Bildmotivs 5 auf der Rückseite 6 der erfindungsgemäßen Lernspielkarte, wie in Figur 4 ersichtlich, so angeordnet, daß es sich nicht stimmig in das Bildmotiv 5 einpaßt, und somit nicht optisch integrierter Bestandteil des Bildmotivs 5 auf der Rückseite 6 der erfindungsgemäßen Lernspielkarte ist.

Wie in Figur 2 ersichtlich kann die Aufgaben- bzw. Frage-Stellung sowie die Antwortvorschläge in den Lösungsvorschlags-Abschnitten 3 bzw. 4 auch in Form eines Textes 12, 13, 14 ausgeführt sein. Natürlich ist auch eine Fragestellung bzw. eine Vorgabe der Lösungsvorschläge möglich, die gemischt Bildmotive sowie Text enthält.

Durch das Vorsehen von mehreren Löchern in der erfindungsgemäßen Lernspielkarte, im dargestellten Beispiel von 2 Löchern, kann ein Lerneffekt erzielt werden, dadurch, daß nur eines der Löcher einem richtigen Lösungsvorschlag zugeordnet ist und gleichzeitig das Bildmotiv 5 auf der Rückseite 6 der erfindungsgemäßen Lernspielkarte so angeordnet und ausgeführt ist, daß nur das dem richtigen Lösungsvorschlag zugeordnete Loch optisch integrierter Bestandteil im Sinne einer optischen Einfügung in das Bildmotiv 5 ist.

Im Falle der obigen Ausführungsbeispiels ist nur ein Loch optisch integrierter Bestandteil des Bildmotivs auf der Rückseite der Lernspielkarte. Selbstverständlich können auch mehrere Löcher optisch integrierter Bestandteil des Bildmotivs auf der Rückseite sein, solange nur ein Loch vorgesehen ist, daß im Sinne einer falschen Lösung nicht optisch in das Bildmotiv auf der Rückseite paßt. Die richtige Lösung besteht also in diesem Fall aus der richtigen Kombination von Löchern, durch die beispielsweise ein Finger, ein Stift oder dgl. gesteckt werden muß. Beispielsweise kann durch das Hindurch stecken von vier Fingern in die Löcher, die die richtige Lösung darstellen, ein Bildmotiv eines vierbeinigen Tieres derart vervollständigt werden, daß die auf der Rückseite herausragenden Finger die Beine des Tieres vervollständigen oder bilden.

Insbesondere aus Figuren 1, 2 sowie der Schnittansicht von Figur ist gut ersichtlich, daß die Löcher 7, 8 der Karte im wesentlichen den gleichen Durchmesser aufweisen. Wie aus der Schnittansicht von Figur 3 sowie den Ansichten gemäß Figur 1 und 2 ersichtlich ist, sind die Löcher 7, 8 in der Karte so angeordnet, daß eine gedachte Verbindungslinie zwischen den Mittelpunkten sämtlicher Löcher 7, 8 in etwa parallel zu einer Kante, im dargestellten Ausführungsbeispiel der Längskante 15 der Karte verläuft.

Hinsichtlich der rückseitigen Bedruckung 5 wie in Figur 4 dargestellt ist zu bemerken, daß gemäß diesem Ausführungsbeispiel in nur eine einzige Bilddarstellung auf der Rückseite 6 der Karte aufgedruckt ist.

Wie in Figur 1 ersichtlich sind die Lösungsmotivabschnitte 9, 10 ihren jeweiligen Löchern 7, 8 dadurch zugeordnet, daß sie räumlich sehr nahe an diesen Löchern 7 bzw. 8 aufgedruckt sind.

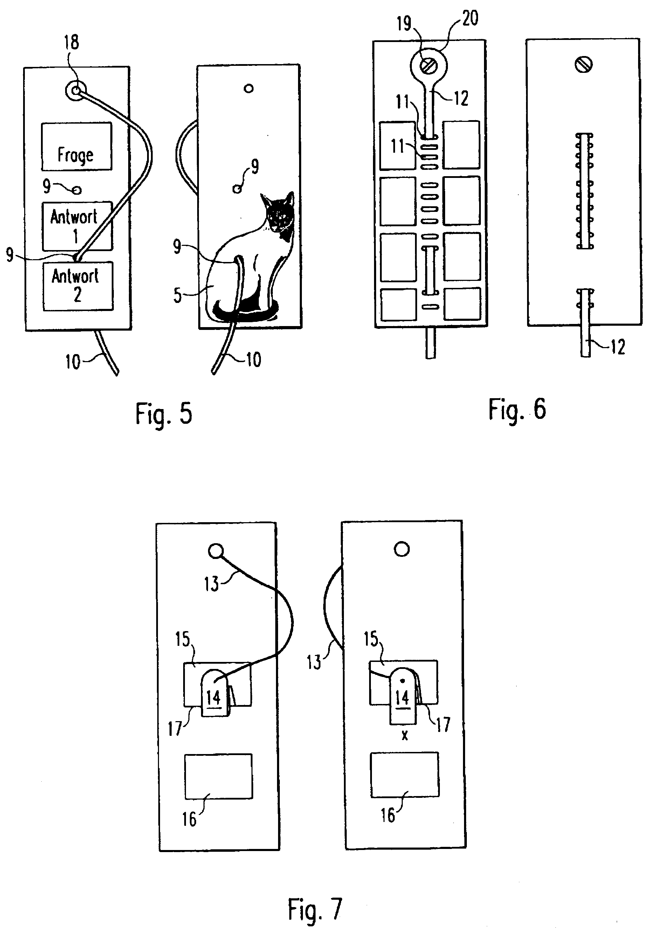

Nunmehr sollen weitere Ausführungsbeispiele der Erfindung bezugnehmend auf Figuren 5 bis 7 erläutert werden.

Bei dem Ausführungsbeispiel gemäß Figur 5 ist eine Schnur 10 fest mit der Karte verbunden. Die Schnur kann beispielsweise im Bereich einer Bindung 18 fest an der Karte angeordnet sein, falls mehrere Karten fächerartig übereinander gebunden sind. Dabei kann die Schnur 10 selbst die Bindung 18 darstellen, indem sie durch sämtliche Karten hindurchgeführt ist. Die Löcher 9 gemäß diesem Ausführungsbeispiel sind so bemessen, daß die Schnur 10 gut hindurchfädelbar ist. Mit anderen Worten, in diesem Fall sind die Löcher 9 im Regelfall mit einem kleineren Durchmesser gefertigt als für den Fall, daß wie bei den Ausführungsbeispielen gemäß Figuren 1 bis 4 Finger oder Stifte durch die Löcher hindurchgesteckt werden sollen.
Das Ausführungsbeispiel von Figur 6 stellt eine Abänderung des Ausführungsbeispiels von Figur 5 dahingehend dar, daß im wesentlichen die Schnur 10 gemäß dem Ausführungsbeispiel von Figur 5 durch ein flaches Band 12 ersetzt wurde, das beispielsweise aus einem Kunststoffmaterial gefertigt ist. Insbesondere kann das Kunststoffband 12 aus einer flachen Kunststofffolie gestanzt sein. Das Kunststoffband 12 kann an dem Befestigungsende an der Karte eine Öse 20 aufweisen, die mittels einer Buchschraube 19 auf der Karte verschraubt ist und beispielsweise gleichzeitig auch eine Bindung für einen Stapel der Karten darstellen kann. Die Löcher 11 in der Karte sind in diesem Fall natürlich der Flachbandform entsprechend schlitzförmig ausgebildet. Das Kunststoffband 12 weist gegenüber der Schnur 10 den Vorteil auf, daß es in den Löchern 11 weniger Reibung aufweist und daher das Kunststoffband 12 leichter durch eine Bewegung aus sämtlichen Fädellöchern 11 herausgezogen werden kann.

Figur 7 stellt ein weiters Ausführungsbeispiel der vorliegenden Erfindung dar, das im wesentlichen durch Klammerelemente 14 gekennzeichnet ist. Diese Klammerelemente 14, die mit einer Schnur 13 ähnlich der Schnur 10 in Figur 5 an der Karte 1 befestigt sind, werden in diesem Fall in rechteckige Löcher 15, 16 randseitig 17 aufgeklemmt, um dadurch einen zugeordneten Lösungsvorschlag zu wählen.

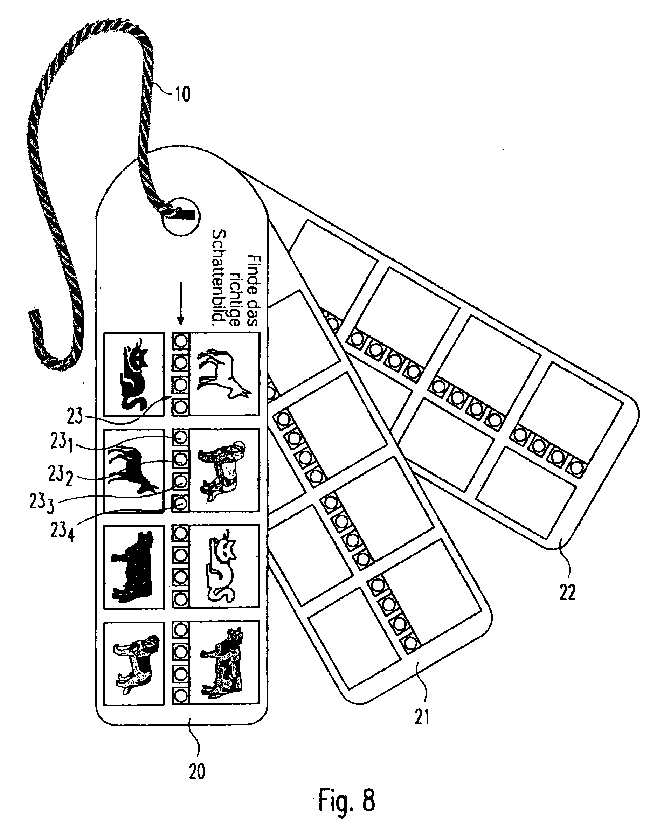

Figur 8 stellt ein noch weiteres Ausführungsbeispiel der vorliegenden Erfindung dar, das wesentliche Elemente des Ausführungsbeispiels aufweist, das bezugnehmend auf Figur 5 erläutert wurde. Mit anderen Worten, zu jeder Fragestellung ist auf der Vorderseite der Karte eine Anordnung 23 von Löchern 23_{1,} 23₂, 23₃, 23₄ vorgesehen. Weiterhin ist eine Schnur 10 fest mit den Karten gemäß Figur 8 verbunden. Die Schnur muß also wiederum zur Lösung der auf der Vorderseite aufgedruckten Fragestellung durch dasjenige der Löcher 23₁, 23₂, 23₃, 23₄ gefädelt werden, das nach Ansicht des Benutzers die richtige Lösung darstellt.
Weiterhin ist bei dem Ausführungsbeispiel gemäß Figur 8 wesentlich, daß mehrere Karten 20, 21, 22 miteinander festverbunden sind, sodaß sie fächerartig auseinandergedreht werden. Die Bindung kann dabei ebenfalls durch die Schnur 10 erfolgen, die also in diesem Fall durch übereinanderliegende Löcher in jeder der Karte 20, 21, 22 hindurchgeht und beispielsweise so verknotet ist, daß die Karten drehbeweglich verbunden sind. Selbstverständlich können auch die Karten gemäß den übrigen in Figur 1 bis Figur 7 dargestellten Ausführungsbeispielen beispielsweise durch eine Buchbindung, eine Buchschraube oder dergleichen stapelartig übereinandergebunden werden, so daß sich eine Anordnung aus Lernspielkarten ergibt, die der Benutzer buchartig oder ficherartig auseinanderklappen kann, um eine vorbestimmte der mehreren Karten auszuwählen und zu benutzen.

## Patentansprüche

1. Karte für Lernspielanwendungen, aufweisend
- wenigstens zwei im wesentlichen gleich große Löcher (7, 8),
- eine Vorderseite (1), auf der wenigstens drei getrennte Abschnitte (9, 10, 11) aufgedruckt sind,
wobei je ein Abschnitt (9, 10) einem der Löcher (7, 8) zugeordnet ist, und
- eine Rückseite (6), die mit einem Bildmotiv (5) oder einer Graphik bedruckt ist, wobei das Bildmotiv (5) bzw. die Graphik auf der Rückseite (6) der Karte so angeordnet ist, daß wenigstens eines der Löcher (7, 8) kein integrierter Bestandteil des Bildmotivs (5) bzw. der Graphik auf der Rückseite (6) der Karte ist.

2. Karte nach Anspruch 1,
dadurch gekennzeichnet,
daß die Löcher (7, 8) einen Durchmesser zwischen 0,5 cm und 2 cm aufweisen.

3. Karte nach Anspruch 1,
dadurch gekennzeichnet,
daß eine Schnur (10) oder ein Band (12) an der Karte befestigt ist und die Löcher (9, 11) so bemessen sind, daß die Schnur (10) bzw. das Band (12) hindurchfädelbar ist.

4. Karte nach Anspruch 3,
dadurch gekennzeichnet,
daß das Band (12) aus einer Kunststoffolie gestanzt ist und die Löcher (11) im wesentlichen schlitzförmig sind.

5. Karte nach einem der Ansprüche 1 bis 4,
dadurch gekennzeichnet,
daß die Löcher (15, 16) eine Rechteckform aufweisen.

6. Karte nach Anspruch 1,
dadurch gekennzeichnet,
daß Klammerelemente (14) vorgesehen sind, die an den Rändern (17, 18) der Löcher (15, 16) festklemmbar sind.

7. Karte nach Anspruch 6,
dadurch gekennzeichnet,
daß die Klammerelemente (14) mit einer Schnur (13) an der Karte befestigt sind.

8. Karte nach einem der vorhergehenden Ansprüche,
dadurch gekennzeichnet,
daß auf der Rückseite (6) der Karte nur eine einzige zusammenhängende Bilddarstellung (5) aufgedruckt ist, wobei wenigstens eines der Löcher (7, 8) in der Karte nicht integrierter Bestandteil der einen zusammenhängenden Bilddarstellung ist.

9. Karte nach einem der vorhergehenden Ansprüche,
dadurch gekennzeichnet,
daß die Zuordnung jeweils eines Abschnitts (9, 10) zu einem der Löcher (7, 8) durch eine räumliche Nähe des jeweiligen Abschnitts (9, 10) zu dem entsprechenden Loch (7, 8) geschaffen ist.

10. Karte nach einem der vorhergehenden Ansprüche,
dadurch gekennzeichnet,
daß einer der auf die Vorderseite (1) gedruckten Abschnitte ein Aufgabenabschnitt (2) ist.

11. Karte nach Anspruch 10,
dadurch gekennzeichnet,
daß der Aufgabenabschnitt (2) Text- und Bildelemente aufweist.

12. Karte nach einem der vorhergehenden Ansprüche,
dadurch gekennzeichnet,
daß mehrere Löcher optisch integrierter Bestandteil des Bildmotivs bzw. der Graphik auf der Rückseite der Karte sind.

13. Karte nach einem der vorhergehenden Ansprüche,
dadurch gekennzeichnet,
daß die Karte aus einem Kartonmaterial gefertigt ist.

14. Karte nach einem der vorhergehenden Ansprüche,
dadurch gekennzeichnet,
daß die Karte rechteckig ist.

15. Karte nach einem der vorhergehenden Ansprüche,
dadurch gekennzeichnet,
daß die Löcher (7, 8) so angeordnet sind, daß eine Verbindungslinie der Mittelpunkte der Löcher (7, 8) im wesentlichen parallel zu einer der Kanten (15) der Karte ist.
